(19) **Europäisches Patentamt**

**European Patent Office**

**Office européen des brevets**

(11) **EP 0 795 762 B1**

(12) **EUROPÄISCHE PATENTSCHRIFT**

(45) Veröffentlichungstag und Bekanntmachung des Hinweises auf die Patenterteilung:
**05.07.2000  Patentblatt 2000/27**

(51) Int Cl.⁷: **G01S 13/90**

(21) Anmeldenummer: **97104062.1**

(22) Anmeldetag: **11.03.1997**

(54) **Verfahren zur Azimut-Skalierung von SAR-Daten und hochgenauer Prozessor zur zweidimensionalen Verarbeitung von ScanSAR-Daten**

Method for azimuth scaling for SAR-data and high precision processor for two-dimensional processing of scan-SAR data

Procédé de mise à l'échelle de l'azimut pour données SAR et processeur à grande précision pour traitement des données SCAN-SAR

(84) Benannte Vertragsstaaten:
**DE FR GB IT**

(30) Priorität: **13.03.1996  DE 19609728**

(43) Veröffentlichungstag der Anmeldung:
**17.09.1997  Patentblatt 1997/38**

(73) Patentinhaber: **Deutsches Zentrum für Luft- und Raumfahrt e.V.**
**53175 Bonn (DE)**

(72) Erfinder:
• **Moreira, Alberto, Dr.**
**85748 Garching (DE)**
• **Mittermayer, Josef**
**81249 München (DE)**

(74) Vertreter: **von Kirschbaum, Albrecht, Dipl.-Ing. Patentanwalt, Bahnhofplatz 2**
**82110 Germering (DE)**

(56) Entgegenhaltungen:
• **YONGHONG HUANG ET AL: "AIRBORNE SAR PROCESSING USING THE CHRIP SCALING AND A TIME DOMAIN SUBAPERTURE ALGORITHM" BETTER UNDERSTANDING OF EARTH ENVIRONMENT, TOKYO, AUG. 18 - 21, 1993, Bd. VOL. 3, Nr. SYMP. 13, 18. August 1993, Seiten 1182-1184, XP000481825 SADAO FUJIMURA**
• **RANEY R K ET AL: "PRECISION SAR PROCESSING USING CHIRP SCALING" IEEE TRANSACTIONS ON GEOSCIENCE AND REMOTE SENSING, Bd. 32, Nr. 4, 1. Juli 1994, Seiten 786-798, XP000465377**
• **SACK M. ET AL.: "Application of efficient linear FM matched filtering alggorithms to synthetic aperture radar processing" IEE PROCEEDINGS SECTION F, Bd. 132, Nr. 1, 1. Februar 1985, Seiten 45-57, XP002075592 Stevenage, Herts. GB**
• **RANEY R K ET AL: "RADARSAT" PROCEEDINGS OF THE IEEE, Bd. 79, Nr. 6, 1. Juni 1991, Seiten 839-849, XP000262357**
• **BAMLER R: "Adapting precision standard SAR processors to ScanSAR" 1995 INTERNATIONAL GEOSCIENCE AND REMOTE SENSING SYMPOSIUM, IGARSS 95 , Bd. vol.3, - 14. Juli 1995 Seiten 2051-2053, XP002075593 New York, NY, USA**

**Beschreibung**

Die Erfindung betrifft ein Verfahren zur Azimut-Skalierung von SAR-Daten und einen hochgenauen Prozessor zur zweidimensionalen Verarbeitung von ScanSAR-Daten.

Nachfolgend wird zuerst eine kurze Einführung in SAR- und ScanSAR-Systeme gegeben. Radar mit synthetischer Apertur (SAR-Synthetic Apertur Radar) dient der Fernerkundung und wird in immer größerem Maße bei der Abbildung, Überwachung und Untersuchung der Erdoberfläche eingesetzt. Bei einem solchen System werden ein sich mit konstanter Geschwindigkeit bewegender Träger, wie beispielsweise ein Flugzeug, ein Hubschrauber u.ä., eine orthogonal zur Bewegungsrichtung blickende Antenne und ein kohärentes Radarsystem verwendet, welches periodisch elektromagnetische Impulse sendet. Die Bewegungsrichtung des Trägers wird als Azimutrichtung und die dazu orthogonale, schräg nach unten weisende Richtung wird als Entfernungsrichtung bezeichnet.

Während eines Überflugs über ein zu beobachtendes Gebiet wird ein Streifen mit der Länge der überflogenen Strecke abgebildet. Die Streifenbreite hängt unter anderem von der Größe des Zeitfensters ab, in welchem die reflektierten Radarechos eines gesendeten Impulses empfangen werden. Die empfangenen Echos werden dann in der Frequenz umgesetzt (gemischt), quadratur-demoduliert, digitalisiert und in einen Echospeicher geschrieben. Jede SAR-Verarbeitung besteht hauptsächlich aus einer Entfernungskompression, einer Korrektur der Zielentfernungsänderung und einer Azimutkompression:

Bei der Entfernungskompression hängt die geometrische Auflösung in Entfernungsrichtung von der Bandbreite der gesendeten Radarimpulse ab. Um diese Auflösung zu verbessern, werden die gesendeten Impulse moduliert. Für das Chirp Scaling-Verfahren wird eine lineare Frequenzmodulation benötigt. Die Entfernungskompression bedeutet eine Filterung der empfangenen Signale in Entfernungsrichtung nach der Optimalfilter-Theorie, wodurch die zeitlich ausgedehnten Signale zu Impulsen komprimiert werden.

Bei einer Korrektur der Zielentfernungsänderung ist die Zielentfernungsänderung eine Folge der Variation der Entfernung zwischen der Antenne und einem Punktziel während der Bildung der synthetischen Apertur. Sie beschreibt die Entfernungsvariation der zu einem Punktziel gehörenden Echos in einem zweidimensionalen Echospeicher.

Bei einer Azimutkompression bewirkt die Impulskompression nach der Optimalfilter-Theorie im Azimut die Bildung der synthetischen Apertur. Die Azimutmodulation ist eine weitere Folge der Entfernungsänderung zwischen Antenne und Ziel bei einem Vorbeiflug des Trägers. Die Optimalfilterung bedeutet ein kohärentes Aufsummieren aller zu einer Azimutposition gehörenden Echos. Wird die Zielentfernungsänderung vor der Azimutkompression korrigiert, so kann diese durch eine eindimensionale Filterfunktion realisiert werden.

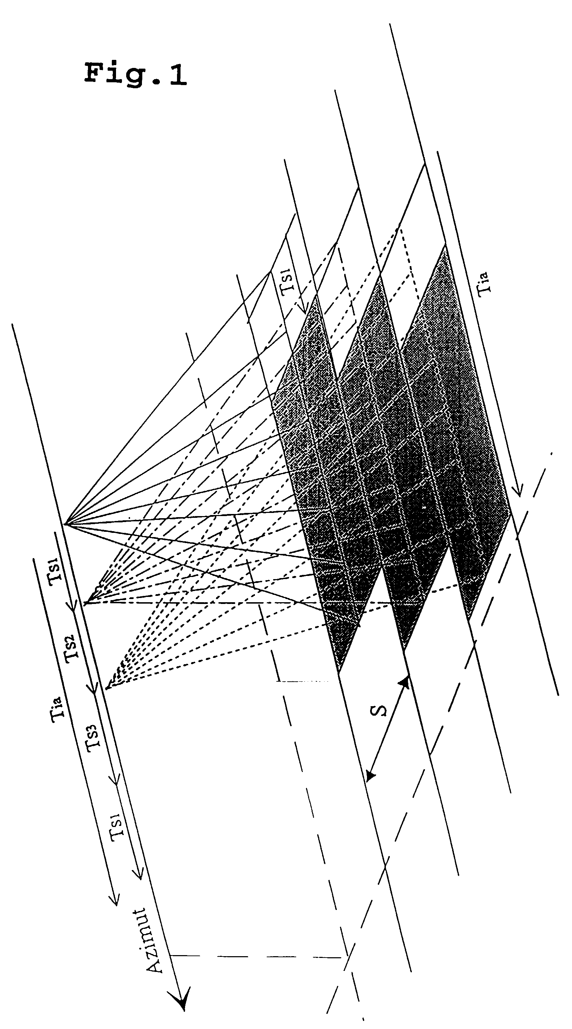

Ein ScanSAR-Modus ist eine Betriebsart eines satelliten-gestützten SAR-Systems, das es ermöglicht, Streifen mit wesentlich größeren Breiten zu prozessieren. In Fig.1 ist die Abbildungsgeometrie eines SAR-Systems dargestellt. Im Scan-SAR-Modus wird die zur Verfügung stehende synthetische Apertur in mehrere Subaperturen aufgeteilt. Während jeder Subapertur besitzt die Antenne einen anderen Blickwinkel. Dadurch werden mehrere, parallel zueinander liegende Teilstreifen abgebildet, und so die Gesamtstreifenbreite wesentlich vergrößert. Durch die Aufteilung der synthetischen Apertur verschlechtert sich allerdings die erzielbare Auflösung im Azimut. Die gesamte synthetische Apertur ist in Fig.1 mit $T_{ia}$ und die n-te Subapertur ist mit $T_{sn}$ bezeichnet.

Um eine lückenlose Abbildung des Teilstreifens in Azimutrichtung zu gewährleisten, muß spätestens nach der Zeit $T_{ia}-T_{sn}$ zur n-ten Subapertur zurückgekehrt werden. Für eine ScanSAR-Verarbeitung muß das zweidimensionale Antennendiagramm sowie der Dopplerzentroid genau bestimmt werden.

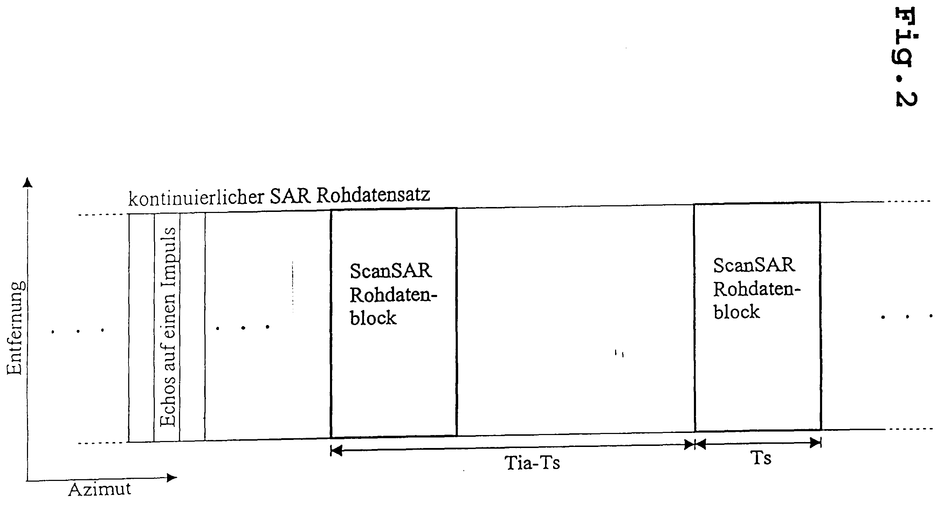

In Fig.2 sind ScanSAR-Rohdaten als ein Abschnitt aus SAR-Rohdaten dargestellt. Hierbei stellen SAR-Rohdaten eine kontinuierliche Aneinanderreihung von Echos in Azimutrichtung dar. Im Unterschied hierzu sind ScanSAR-Rohdaten Blöcke von aneinandergereihten Echos. Im Falle der SAR-Rohdaten besitzt jedes Punktziel in Azimutrichtung einen kompletten Azimutchirp sowie die volle Dopplerbandbreite. Bei ScanSAR-Rohdaten besitzt jedes Punktziel nur einen Teilchirp der Länge $T_s$. Die Teilchirps von Zielen an verschiedenen Azimutpositionen stellen unterschiedliche Ausschnitte aus einem kompletten Azimutchirp dar und liegen im ScanSAR-Rohdatenblock übereinander.

Für eine ScanSAR-Verarbeitung kann ein SPECAN-Verfahren, ein Verfahren im Frequenzbereich oder ein angepaßtes Streifenmodus-Verfahren verwendet werden. Das SPECAN-Verfahren (siehe Veröffentlichung von Sack M.: Application of efficient linear FM matched filtering algorithms to synthetic aperture radar processing, IEE Proceedings, Vol.132, Pt. F., No.1,Februar 1985) ist ein normales Range-Dopplerverfahren, bei dem die Entfernungskompression sowie die Korrektur der Zielentfernungsänderung im Entfernungs-Dopplerbereich durchgeführt werden. Es wird jedoch nur der lineare Anteil der Zielentfernungsänderung korrigiert, und es erfolgt keine zweite Entfernungskompression (Secondary Range Compression). Die Azimutkompression erfolgt durch Eliminierung der Dopplermodulation im Zeitbereich mit einer Derampingfunktion und eine sich anschließende Transformation in den Entfernungs-Dopplerbereichen. Die Derampingfunktion ist dabei ein linear frequenzmoduliertes Signal mit einer von der Entfernung abhängigen Dopplerrate.

Das Verfahren im Frequenzbereich (siehe Veröffentlichung von Wilson C. und Corr D.G.: Data Processing Techniques and Operational Considerations for ScanSAR Systems, Proc. von IGARSS, 1991) ist ein unverändertes Range-Dopplerverfahren. Um Rückfaltungen zu vermeiden, muß aber die Azimutdimension des ScanSAR-Datenblocks vor der Azimutkompression vergrößert werden. Ein mit Nullen aufgefüllter, zusätzlicher Bereich muß mindestens die Azimutlänge der längsten Referenzfunktion im Azimut besitzen. Grundsätzlich kann nach einer solchen Erweiterung der Azimutdimension jedes für eine SAR-Verarbeitung geeignete Verfahren auch für die ScanSAR-Prozessierung verwendet werden.

Das angepaßte Streifenmodus-Verfahren (siehe Veröffentlichung von Bamler R.: Adapting Precision Standard SAR Processors to ScanSAR, Proceeding of IGARSS '95, Stn. 2051 bis 2053) ist eine Erweiterung des zuletzt beschriebenen Verfahrens. Es werden beliebig viele ScanSAR-Rohdatenblöcke hintereinandergefügt und mit einem beliebigen SAR-Prozessierungsverfahren verarbeitet. Die sich dabei ergebende, periodische Modulation der einzelnen Impulsantworten wird durch eine Tiefpaßfilterung am Ende der Prozessierung entfernt.

Das (Entfernungs-) Chirp Scaling (siehe Raney R. K., Runge H., Bamler R., Cumming I. und Wong F.: Presision SAR Processing Using Chirp Scaling, IEEE Transactions on Geoscience and Remote Sensing, Vol.32, Juli 1994. - Moreira A., Huang Y.: Airborne SAR Processing of Highly Squinted Data Using a Chirp Scaling Approach with Integrated Motion Compensation, IEEE Transactions on Geoscience and Remote Sensing, Vol.32, September 1994) findet im Entfernungs-Dopplerbereich statt. Dabei werden die Trajektorien, auf denen die Phasenzentren der Entfernungschirps liegen, an den Verlauf einer Referenztrajektorie angeglichen. Die Korrektur der Zielentfernungsänderung und die Entfernungskompression finden beim Chirp-Scaling-Verfahren im Anschluß an das Chirp-Scaling im zweidimensionalen Frequenzbereich statt. Dabei kann die Zielentfernungsänderung wegen der erfolgten Angleichung der Trajektorien für alle Entfernungen mit der gleichen, nur von der Dopplerfrequenz abhängigen Phasenfunktion erfolgen. Die Azimutkompression erfolgt dann wieder im Entfernungs-Dopplerbereich. Bisher wurde das Chirp-Scaling-Verfahren nur zur Prozessierung von SAR-Daten im Streifenmodus verwendet.

Nachteiling beim SPECAN-Verfahren ist, daß keine keine genaue Korrektur der Zielentfernungsänderung erfolgt, da nur der lineare Anteil der Zielentfernungsänderung berücksichtigt wird. Ferner befindet man sich nach der letzten Fast-Fourier-Transformation (FFT) im Entfernungs-Dopplerbereich. Um auf die Skalierung des Azimut-Zeitbereichs zu kommen, ist eine aufwendige Neuabtastung in Azimutrichtung notwendig.

Da die Azimutmodulation nur in einer Näherung eine lineare Frequenzmodulation ist, ist die Derampingfunktion nur in der Nähe des Dopplerzentroiden gut angepaßt. Je weiter die Signalfrequenzen vom Dopplerzentroid abweichen, um so schlechter ist diese Anpassung, und damit auch die Fokussierung im Azimut.

Nachteilig bei dem Verfahren im Frequenzbereich ist, daß wegen der Erweiterung der Azimutdimension für einen ScanSAR-Datenblock die gleiche Anzahl von Rechenoperationen wie für einen normalen SAR-Rohdatenblock benötigt wird; somit ist der Rechenaufwand sehr hoch.

Nachteilig bei dem angepaßten Streifenmodus-Verfahren ist, daß durch das Hintereinanderfügen mehrerer ScanSAR-Rohdatenblöcke sich zwar der Rechenaufwand verringert, aber es immer noch Bereich mit Nullen zwischen den einzelnen Rohdatenblöcken gibt. Hieraus folgt ein immer noch hoher Rechenaufwand.

Aufgabe der Erfindung ist es daher, ein Verfahren zur Azimut-Skalierung von SAR-Daten sowie einen hochgenauen Prozessor zur zweidimensionalen Verarbeitung von ScanSAR-Daten zu schaffen, wobei eine Interpolation für eine Korrektur der Zielentfernungsänderung und eine geometrische Skalierung im Azimut nicht mehr benötigt werden. Gemäß der Erfindung ist dies bei einem Verfahren zur Azimut-Skalierung von SAR-Daten ohne Interpolation durch die Merkmale des Anspruchs 1 erreicht. Ferner ist dies bei einem hochgenauen Prozessor zur zweidimensionalen Verarbeitung von ScanSAR-Daten durch die Merkmale des Anspruchs 2 erreicht.

Bei der erfindungsgemäßen zweidimensionalen Verarbeitung von ScanSAR-Daten sind das Chirp-Scaling- und das SPECAN-Verfahren verwendet, wobei das Chirp-Scaling-Verfahren zur Entfernungskompression und zur Korrektur der Zielentfernungsänderung verwendet wird, während in der Azimutverarbeitung ein gemäß der Erfindung wesentlich verbessertes SPECAN-Verfahren eingesetzt wird. Ferner wird durch ein gemäß der Erfindung neu entwickeltes Azimut-Scaling die rechenaufwendige Neuabtastung des SPECAN-Verfahren nicht mehr benötigt.

Bei dem erfindungsgemäßen Verfahren erfolgt somit eine Prozessierung von Subaperturen durch die Kombination des Chirp-Scaling-Verfahrens (einem Entfernungs-Scaling) und dem SPECAN-Verfahren. Da die Azimutkompression bei dem SPECAN-Verfahren durch ein gemäß der Erfindung neu entwickeltes Azimut-Scaling wesentlich verbessert ist, sind dadurch Nachteile des SPECAN-Verfahrens beseitigt. Insbesondere erfolgt bei dem erfindungsgemäßen Azimut-Scaling eine Eliminierung der entfernungsabhängigen, hyperbolischen Azimutphase und ein Einfügen einer linearen Frequenzmodulation für eine Referenzentfernung.

Gegenüber den bisher eingesetzten und angewandten Verfahren weist das erfindungsgemäße Verfahren die folgenden Vorteile auf: Durch das Verwenden des Chirp-Scaling-Verfahrens ist zur Korrektur der Zielentfernungsänderung eine Interpolation nicht mehr erforderlich. Obendrein erfolgt die Korrektur der Zielentfernungsänderung auch für große Driftwinkel sehr genau.

Am Ende einer Prozessierung befindet man sich im Entfernungs-Dopplerbereich. Nach dem Azimut-Scaling ist die Dopplerrate in allen Entfernungen diejenige der Skalierungs-Entfernung. Da die Dopplerrate somit nicht mehr entfernungsabhängig ist, ist am Ende der Prozessierung in allen Entfernungen automatisch die gleiche Azimut-Skalierung vorhanden. Die gewünschte Skalierung des Zeitbereichs in Azimutrichtung kann durch die Wahl der Skalierungsentfernung beim Azimut-Scaling eingestellt werden. Somit kann die beim SPECAN-Verfahren benötigte Neuabtastung in Azimutrichtung entfallen.

Die Derampingfunktion ist gemäß der Erfindung für alle Dopplerfrequenzen sehr gut angepaßt, da beim Azimut-Scaling der genaue, hyperbolische Phasenverlauf im Azimut berücksichtigt wird. Dadurch ist die Phasengenauigkeit des erfindungsgemäßen Verfahrens sehr hoch.

Ferner ist auch nur eine geringe Erweiterung der Azimut-Dimension notwendig, damit bei der Azimut-Kompression durch die Derampingfunktion mit anschließender FFT keine Rückfaltungen auftreten. Dadurch ist der Rechenaufwand sehr klein gehalten. Wegen der durchzuführenden Fast-Fourier-Transformationen (FFT's) ist nur eine geringe Erweiterung der Azimut-Dimension auf die nächste Zweierpotenz notwendig. Eine ebenfalls nur geringe Erweiterung wird durch das Azimut-Scaling-Verfahren notwendig. Im allgemeinen reicht jedoch die Erweiterung auf die nächste Zweierpotenz aus.

Nachfolgend wird die Erfindung anhand von bevorzugten Ausführungsformen unter Bezugnahme auf die anliegenden Zeichnungen im einzelnen erläutert. Es zeigen:

Fig.1    die grundlegende Geometrie eines SAR-Systems in einem ScanSAR-Modus;

Fig.2    ScanSAR-Rohdaten als Ausschnitt aus SAR-Rohdaten;

Fig.3    in Form eines Blockschaltbildes ein Ausführungsbeispiel des erfindungsgemäßen Verfahrens;

Fig.4    mehrere Zwischenschritte bei der Prozessierung gemäß dem Ausführungsbeispiel in Fig.3;

Fig.5    das Ergebnis der Prozessierung von sechs Punktzielen mit Hilfe des erfindungsgemäßen Verfahrens ohne ein Azimut-Scaling;

Fig.6    ein Ergegnis der Prozessierung mit Hilfe des erfindungsgemäßen Verfahrens mit einem Azimut-Scaling, und

Fig.7    eine reale Szene, welche aus Teilen von Rohdaten eines experimentellen SAR-Systems (E-SAR) der Anmelderin prozessiert wurde.

In Fig.1 ist, wie eingangs schon ausgeführt, die grundlegende Geometrie eines SAR-Systems im ScanSAR-Modus dargestellt. Hierbei ist die Bewegungsrichtung eines Trägers, beispielsweise eines Flugzeugs u.ä., mit Azimut bezeichnet. Die vollständige synthetische Apertur $T_{ia}$ ist in drei Subaperturen $T_{S1}$, $T_{S2}$ und $T_{S3}$ aufgeteilt. In einem ersten Teilstreifen ist dessen Streifenbreite mit S bezeichnet. Die in verschiedenen Linienarten bezeichneten Antennensichten beleuchten unter verschiedenen Blickwinkeln je einen Teilstreifen.

In Fig.2 sind ScanSAR-Rohdaten als Ausschnitt aus SAR-Rohdaten dargestellt. Hierbei bestehen die SAR-Rohdaten aus einem dargestellten, in Azimutrichtung kontinuierlich ausgedehnten Echosatz. Die ScanSAR-Rohdaten sind dagegen Blöcke von Echos mit der Azimutdauer, welche gleich der Subaperturzeit $T_S$ ist. Die Periode des Auftretens der ScanSAR-Rohdatenblöcke ist in Fig.2 zur Dauer der kompletten synthetischen Apertur $T_{ia}$ abzüglich der Dauer der Subapertur $T_S$ gewählt. Dies entspricht dann dem Fall einer gerade noch lückenlosen Abbildung eines Teilstreifens.

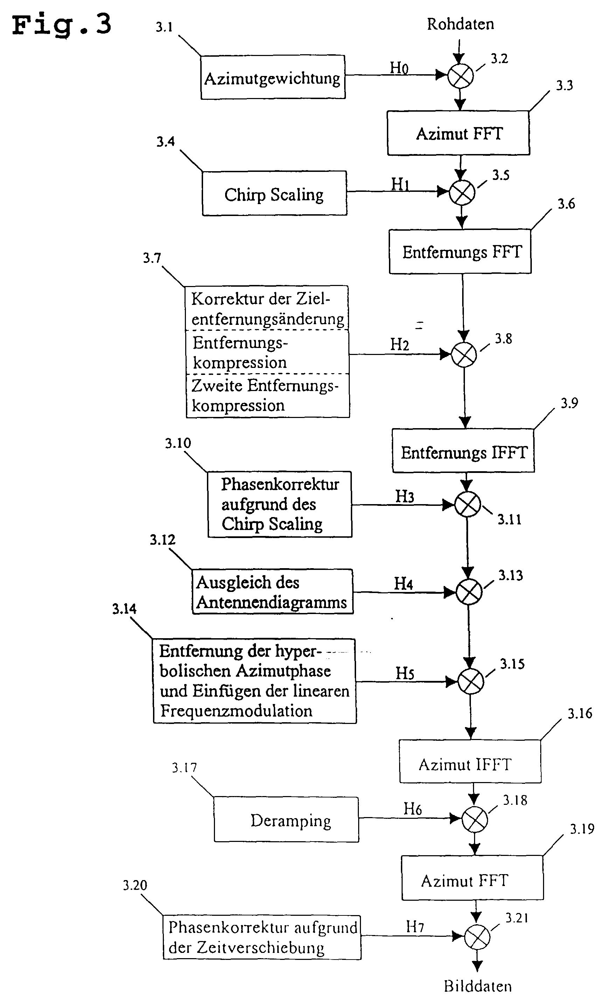

In Fig.3 ist ein Ausführungsbeispiel des erfindungsgemäßen Verfahrens in Form eines Blockschaltbildes wiedergegeben. In Fig.3 ist mit $t_a$ die Zeit in Azimutrichtung (d.h. die Flugzeit), mit $t_e$ die Zeit in Entfernungsrichtung (d.h. die Echolaufzeit), mit $f_a$ die Azimutfrequenz (d.h. die Dopplerfrequenz), mit $f_e$ die Entfernungsfrequenz und mit $r_o$ die Entfernung zu einem Punktziel bezeichnet.

In Fig.3 werden zuerst empfangene ScanSAR-Rohdaten im Zeitbereich in Azimut mit einer Gewichtungsfunktion $H_0$ (Block 3.1) in einer ersten Multipliziereinheit 3.2 multipliziert, was eine Nebenzipfel-Dämpfung in Azimutrichtung bewirkt. Hierbei kann die Gewichtungsfunktion $H_0$ beispielsweise eine Hamminggewichtung sein. Diese Gewichtung erfolgt am Anfang der Prozessierung, da nach dem Azimut-Scaling Signale von Punktzielen in verschiedenen Entfernungen unterschiedliche Azimutausdehnung sowohl im Zeitbereich als auch im Frequenzbereich haben. Damit kann die Nebenzipfel-Unterdrückung im Azimut nach einem Azimut-Scaling nicht durch Gewichten der Derampingfunktion mit einer für alle Entfernungen gleichen Gewichtungsfunktion erfolgen.

Der nächste Schritt (Block 3.3) ist eine Transformation in den Entfernungs-Dopplerbereich durch eine Azimut-FFT. Anschließend wird ein Chirp-Scaling durchgeführt. Hierzu wird die Chirp Scaling-Funktion $H_1$ (Block 3.4) in einer zweiten Multipliziereinheit 3.5 auf das Signal multipliziert.

Das Chirp-Scaling bewirkt die Angleichung der entfernungsabhängigen Krümmungen der Tajektorien an die Krümmung einer Referenz-Trajektorie für eine Referenzentfernung $r_{ref}$. Hierbei stellt eine Trajektorie den geometrischen Ort der Phasenzentren aller Entfernungssignale dar, welche zu einem Punktziel gehören. Der Verlauf der Referenztrajektorie läßt sich durch $t_{e,ref}(f_a)$ auf folgende Weise beschreiben:

$$t_{e,ref}(f_a) = \frac{2r_{ref}}{c_o}(a(f_a)+1) \tag{1}$$

Hierbei beschreibt der lineare Skalierungsfaktor $a(f_a)$ die Frequenzabhängigkeit der Entfernungsvariation. In (1) ist mit $c_0$ die Lichtgeschwindigkeit bezeichnet.

$$a(f_a) = \frac{1}{\sqrt{1-\dfrac{\lambda^2 f_a^2}{4V_g V_s}}} - 1 \tag{2}$$

In (2) sind mit $\lambda$ die Wellenlänge, mit $V_g$ die Geschwindigkeit am Boden und mit $V_s$ die Geschwindigkeit des Trägers bezeichnet.

In der Chirp-Scaling-Funktion $H_1$ ist $k_{eff}$ die von der Azimutfrequenz und der Referenzentfernung abhängige Modulationsrate in Entfernungsrichtung, welche auch die zweite Entfernungskompression (Secondary Range Compression) berücksichtigt:

$$H_1(f_a, t_e; r_o) = \exp\left[-j\pi k_{eff}(f_a; r_{ref})a(f_a)(t_e - t_{e,ref}(f_a))^2\right] \tag{3}$$

Nach dem Chirp-Scaling erfolgt durch eine Entfernungs-FFT (Block 3.6) die Transformation in den zweidimensionalen Frequenzbereich, in welchem die Entfernungskompression und die Korrektur der Zielentfernungsänderung durch eine Multiplikation mit der Phasenfunktion $H_2$ (Block 3.7) in einer dritten Multipliziereinheit 3.8 durchgeführt wird:

$$H_2(f_a, f_e; r_{ref}) = \exp\left[\frac{-j\pi f_e^2}{k_{eff}(f_a; r_{ref})(1+a(f_a))}\right]\exp\left[\frac{j4\pi}{c_o}r_{ref}\, a(f_a)f_e\right] \tag{4}$$

In (4) gibt der erste Exponentialausdruck die Filterfunktion für die Entfernungskompression wieder. Der zweite Exponentialausdruck bewirkt eine Korrektur der Zielentfernungsänderung. Wegen des durchgeführten Chirp-Scaling kann eine solche Korrektur für alle Entfernungen gleichzeitig durch eine nur noch von der Azimutfrequenz abhängige, lineare Verschiebung in der Entfernungsrichtung durchgeführt werden.

Beim nächsten Verfahrensschritt erfolgt eine Rücktransformation in den Entfernungs-Dopplerbereich durch eine Entfernungs-IFFT (Inverse Fast-Fourier-Transformation; Block 3.9). Beim Chirp-Scaling ergibt sich eine zusätzliche, entfernungsabhängige Azimutphase, welche durch eine Multiplikation mit einer Korrekturfunktion $H_3$ (Block 3.10) in einer vierten Multipliziereinheit 3.11 wieder entfernt wird.

$$H_3(f_a; r_o) = \exp\left[j\pi k_{eff}(f_a; r_{ref})(1+a(f_a))a(f_a)\left(\frac{2}{c_o}(r_o - r_{ref})\right)^2\right] \tag{5}$$

Auch der nächste Prozessierungsschritt erfolgt wieder im Entfernungs-Dopplerbereich. Ein Ausgleich des Antennendiagramms in Azimut wird durch eine Multiplikation mit einer Gewichtungsfunktion $H_4(f_a)$ (Block 3,12) in einer fünften Multipliziereinheit 3.13 erreicht. Das Antennendiagramm kann entweder aus theoretischen Modellen berechnet oder vor dem eigentlichen Einsatz durch Messungen ermittelt werden. Die Gewichtungsfunktion $H_4(f_a)$ ist der Kehrwert des ermittelten Antennendiagramms.

Beim nächsten Verfahrensschritt wird ein Azimut-Scaling durchgeführt. Hierdurch wird durch eine Multiplikation der Signale mit einer Phasenfunktion $H_5$ (Block 3.14) in einer sechsten Multipliziereinheit 3.15 die hyperbolische Azimutphase entfernt und durch einen exakt quadratischen Phasenverlauf ersetzt. Wegen der nach dem Azimut-Scaling noch vorhandenen, exakten linearen Frequenzmodulation wird später ein Deramping bei allen Zeitpunkten sehr gut angepaßt durchgeführt. Die Genauigkeit der Azimut-Kompression des Chirp-Scaling-Verfahrens wird durch die Phasenfunktion $H_5$ auf das schnelle SPECAN-Verfahren übertragen.

$$H_5(f_a; r_0) = \exp\left[\frac{j4\pi r_0}{\lambda}\left(\sqrt{1 - \frac{f_a^2 \lambda^2}{4 V_g V_s}} - 1\right)\right]\exp\left[\frac{j\pi}{k_{scl}} f_a^2\right] \quad (6)$$

$$k_{scl} = \frac{2 V_g V_s}{\lambda r_{scl}} \quad (7)$$

Hierbei ist mit $r_{scl}$ die Skalierung-Entfernung bezeichnet, welche die für alle Entfernungen geltende Skalierungs-Dopplerrate $k_{scl}$ bestimmt.

Da das Azimut-Scaling im Zeitbereich eine Verschiebung derjenigen Azimutsignale bewirkt, die nicht in der Beleuchtungsmitte liegen, ist eine geringfügige Erweiterung der Azimutdimension (um etwa 20%) notwendig. Meist liegt diese Erweiterung jedoch noch innerhalb der Grenzen, auf welche wegen der Vergrößerung auf die nächste Zweierpotenz erweitert wurde. Die Azimutpunktzahl soll eine Zweierpotenz sein, damit die Berechnungszeit für die Azimut-FFT's gering ist.

Beim nächsten Verfahrensschritt erfolgt eine Rücktransformation in den Zeitbereich durch eine Azimut-IFFT (Block 3.16). Durch das nun erfolgende Deramping (Block 3.17) wird die lineare Frequenzmodulation durch eine Mul-tiplikation mit der Derampingfunktion $H_6$ (Block 3.17) in einer siebten Multipliziereinheit 3.18 durchgeführt. Die Derampingfunktion ist ein linear frequenzmoduliertes Signal mit der invertierten Skalierungs-Dopplerrate des Azimut-Scaling.

$$H_6(t_a) = \exp\left[j\pi k_{scl} t_a^2\right] \quad (8)$$

Nach dem Multiplizieren mit der Deramping-Funktion ist das Azimutsignal im Zeitbereich eine Überlagerung von konstanten Schwingungen, welche beim nächsten Verfahrensschritt durch eine Azimut-FFT (Block 3.19) voneinander getrennt und zu Impulsen komprimiert werden. Im letzten Verfahrensschritt erfolgt eine Phasenkorrektur, welche einen Phasenfehler ausgleicht, welcher durch das Zentrieren der Azimutsignale in den Rohdaten entsteht. Für diese Korrektur wird am Ende der Prozessierung die Phasenfunktion $H_7(f_a)$ (Block 3.20) in einer achten Multipliziereinheit 3.21 auf die Signale multipliziert.

$$H_7(f_a) = \exp\left[j2\pi f_a \frac{T'}{2}\right] \quad (9)$$

Hierbei ist T' die Gesamtlänge des Azimutbereichs im Zeitbereich nach der Erweiterung der Azimutdimension bezeichnet.

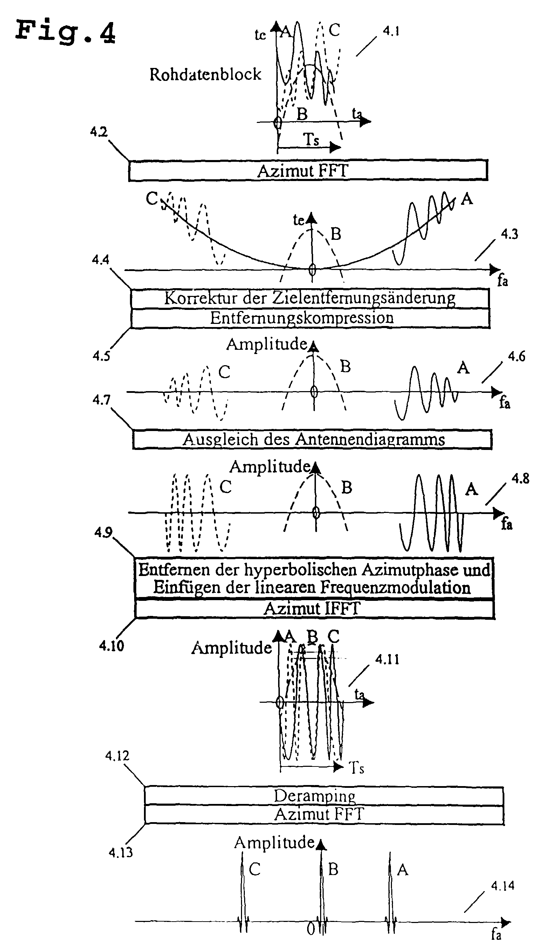

In Fig.4 sind zur Verdeutlichung und Erläuterung des Blockschaltbilds der Fig.3 mehrere Zwischenschritte der Prozessierung dargestellt. Die mit Rohdatenblock bezeichnete Darstellung 4.1 gibt die in einem Rohdatenblock enthaltenen Azimut-signale für drei Punktsignale im Zeitbereich wieder. Hierbei sind auf der Abszisse die Flugzeit $t_a$ in Azimutrichtung und auf der Ordinate die Echolaufzeit $t_e$ in Entfernungsrichtung aufgetragen. Ein mit B bezeichnetes Ziel befindet sich in der Mitte, während sich am rechten und linken Rand des gültigen Teilstreifens die Ziele A und C befinden. Die Länge Tia-Ts des gültigen Teilstreifens ist die maximale Länge, welche aus einem Rohdatenblock der Länge Ts prozessiert werden kann. Aus den Signalverläufen ist ersichtlich, daß die Azimutsignale der drei Punktsignale A bis C unterschiedliche Ausschnitte aus einem kompletten Azimutchirp sind, wie er bei einer normalen SAR-Prozessierung vorliegt.

Der erste Verfahrensschritt, die Nebenzipfel-Unterdrückung im Azimut ist in Fig.4 nicht näher dargestellt. Nach der Transformation in den Entfernungs-Dopplerbereich durch die Azimut-FFT (Block 4.2 in Fig.4 bzw. Block 3.3 in Fig.3)ist in der Darstellung 4.3 das Azimutspektrum von drei Teilchirps wiedergegeben, wobei auf der Abszisse die Azimut- bzw. Dopplerfrequenz $f_a$ und auf der Ordinate wieder die Echolaufzeit $t_e$ in Entfernungsrichtung aufgetragen ist. Die im Zeitbereich überlagerten Azimut-Signale befinden sich im Entfernungs-Dopplerbereich bei verschiedenen Dopplerfrequenzen, und zwar in Abhängigkeit von der Azimutposition der Ziele bei der Beleuchtung.

Nach der Korrektur der Zielentfernungsänderung (Block 4.4 in Fig.4 bzw.oberer Teil in Block 3.7 in Fig.3) und der Entfernungskompression inklusive zweiter Entfernungskompression (Block 4.5 in Fig.4 und unterer Teil von Block 3.7 in Fig.3) im zweidimensionalen Frequenzbereich sind in der Darstellung 4.6 die Azimutsignale der Punktziele wieder im Entfernungs-Dopplerbereich dargestellt, wobei auf der Abszisse wieder die Azimut- bzw. Dopplerfrequenz $f_a$ und auf der Ordinate die Amplitude aufgetragen sind. In der Darstellung 4.8 sind die Signale nach dem Ausgleich des Antennendiagramms im Azimut (Block 4.7 in Fig.4 bzw. Block 3.12 in Fig.4) wiedergegeben.

In der Darstellung 4.11 sind die Signale nach einem Azimut-Scaling, bei welchem die hyperbolische Azimutphase entfernt und die lineare Frequenzmodulation eingefügt wurde (siehe Block 4.9 in Fig.4 bzw. Block 3.14 in Fig. 3), und einer Rücktransformation in den Zeitbereich durch die Azimut-IFFT (Block 4.10 in Fig.4 bzw. Block 3.16 in Fig. 3) dargestellt. Die wiedergegebenen Signale stammen von Zielen bei der Skalierungs-Entfernung $r_{scl}$. Aus diesem Grund ist auch keine Azimutzeit-Verschiebung vorhanden, und die Signale liegen, wie in der Darstellung 4.11 gezeigt, exakt übereinander.

Nach einem Deramping (Block 4.12 in Fig.4 bzw.Block 3.17 in Fig.3) und der Azimut-FFT (Block 4.13 in Fig. 4 bzw. Block 3.19 in Fig.3) sind die endgültig prozessierten Signale in der Darstellung 4.14 abschließend dargestellt. Der letzte Schritt der Prozessierung, nämlich die Phasenkorrektur aufgrund der Zeitverschiebung der Rohdaten (Block 3.20 in Fig.3) ist in Fig.4 nicht gesondert dargestellt.

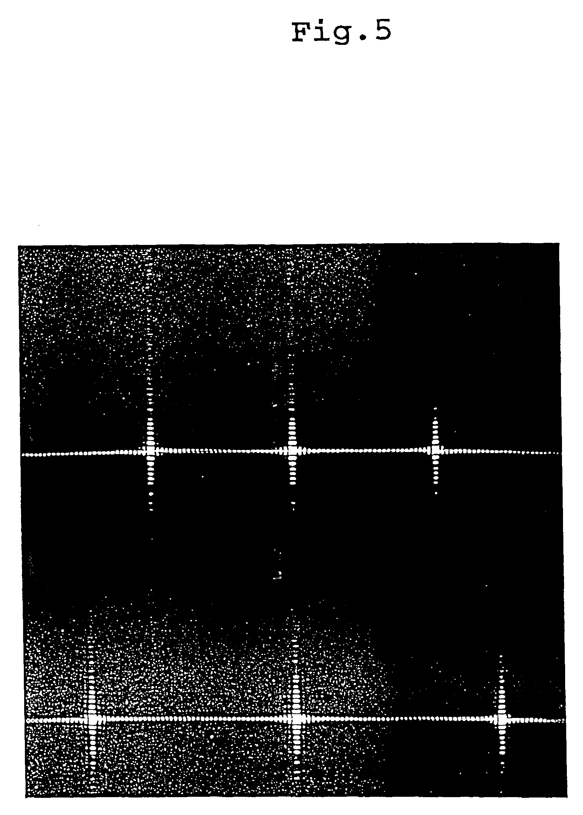

In Fig.5 ist das Ergebnis einer Prozessierung von sechs Punktzielen mit Hilfe des erfindungsgemäßen Verfahrens ohne eine Azimut-Skalierung dargestellt. Die Ziele liegen so in zwei unterschiedlichen Entfernungen, daß sich jeweils zwei Punktziele an der gleichen Azimutposition befinden. Die in der Entfernung unterschiedliche Azimutskalierung ist an der unterschiedlichen Azimut-Positionierung der Ziele zu erkennen. Um auf eine mit der Entfernung konstante Skalierung zu kommen, muß sich an die Prozessierung eine aufwendige Neuabtastung anschließen.

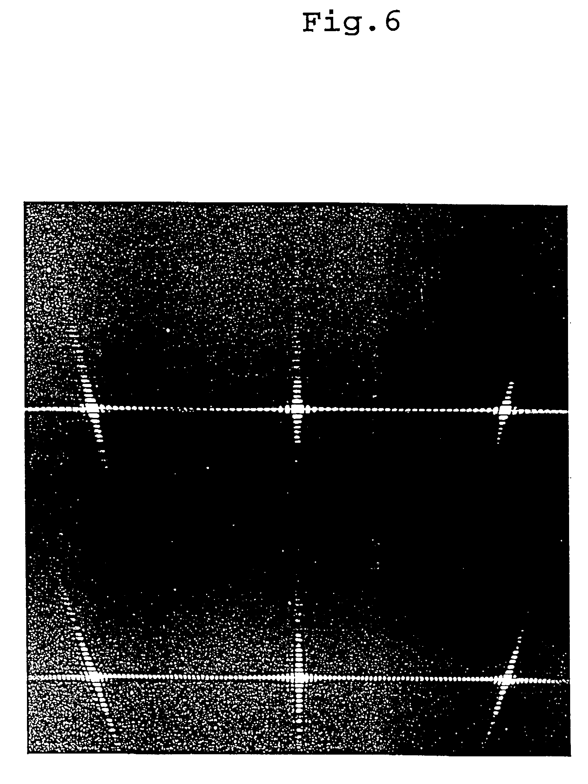

In Fig.6 ist daher das Ergebnis der Prozessierung gemäß dem erfindungsgemäßen Verfahren mit einer Azimut-Skalierung wiedergegeben. Da die Azimut-Skalierung bereits nach der letzten Azimut-FFT (Block 3.19 bzw. 4.13) korrekt ist, entfällt gemäß der Erfindung eine Neuabtastung.

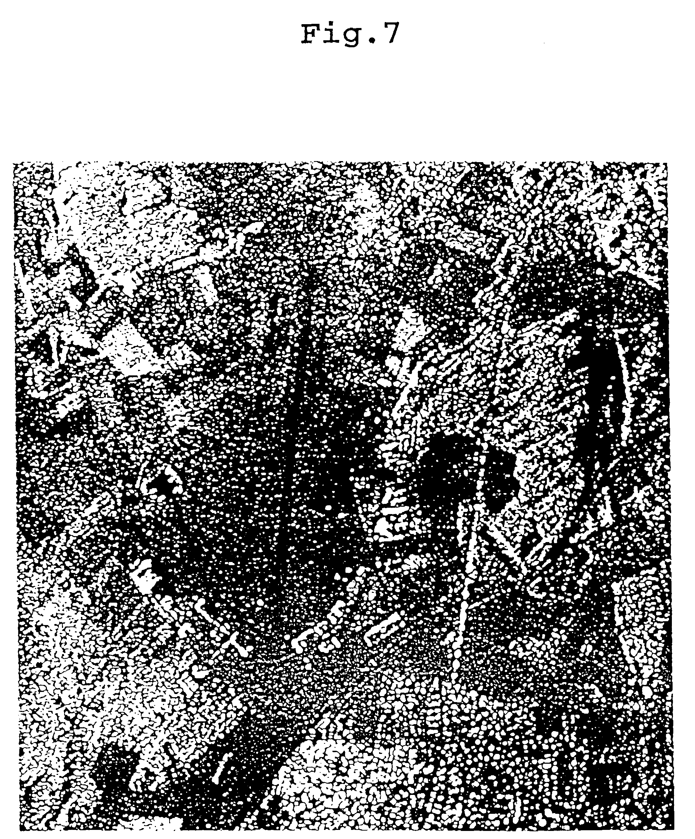

In Fig.7 ist eine reale Szene wiedergegeben, welche aus Rohdaten des experimentellen SAR-Systems (E-SAR) der DLR, der Anmelderin der vorliegenden Anmeldung, prozessiert wurde. dabei wurde der ScanSAR-Modus durch nur abschnittsweises Verwenden des kontinuierlichen Rohdatensatzes im Azimut simuliert. Die Dauer der Sub-apertur $T_s$ wurde auf ein Viertel (1/4) der verfügbaren synthetischen Apertur $T_{ia}$ gesetzt. Zur Unterdrückung des Speckle-Rauschens wurde in der Azimut- und der Entfernungsrichtung je eine gleitende Mittelwertbildung durchgeführt.

Die dargestellte Szene hat eine Größe (Azimut x Entfernung) von (4056m x 3072m) mit einer Azimutauflösung im Nahbereich von etwa 19,5m und im Fernbereich von etwa 21m. Die Entfernungsauflösung beträgt ungefähr 13,5m.

In der rechten Hälfte der wiedergegebenen Szene befindet sich eine Bahnlinie, bei welcher ein steter Wechsel von hellen und dunklen Abschnitten auffällt. Dies ist eine Folge der Prozessierung in Azimutrichtung aus verschiedenen Teilen des Antennendiagramms. Die Bahnlinie reflektiert unter verschiedenen Blickwinkeln der Antenne stark unterschiedlich.

Das gemäß der Erfindung durchgeführte Azimut-Scaling kann auch zu einer Datenverarbeitung von SAR-Daten im Spotlight-Modus verwendet werden. Dadurch wird, wie bei der Verarbeitung von ScanSAR-Daten, eine Prozessierung ohne eine Interpolation ermöglicht.

## Patentansprüche

**1.** Verfahren zur Azimut-Skalierung von SAR-Daten ohne Interpolation, bei welchem

- die SAR-Rohdaten in Azimut mit einer entsprechenden Phasenfunktion

$$H_5(f_a; r_0) = \exp\left[\frac{j4\pi r_0}{\lambda}\left(\sqrt{1 - \frac{f_a^2 \lambda^2}{4 V_g V_s}} - 1\right)\right]\exp\left[\frac{j\pi}{k_{scl}} f_a^2\right]$$

$$k_{scl} = \frac{2V_g V_s}{\lambda r_{scl}}$$

multipliziert werden,
wobei mit $f_a$ die Azimutfrequenz, mit $r_0$ die Entfernung zu einem Zielpunkt, mit $\lambda$ die Wellenlänge, $V_g$ die Geschwindigkeit am Boden, mit $V_s$ die Geschwindigkeit des Trägers, mit $k_{scl}$ die Skalierungs-Dopplerrate und mit $r_{scl}$ die Skalierungs-Entfernung bezeichnet sind, wobei die Skalierungsentfernung $r_{scl}$ innerhalb des Entfernungsbereichs eines Bildes liegen sollte, und

-  eine Azimut-Modulation bei den SAR-Daten durch die Phasenfunktion $H_5(f_a, r_0)$ an diejenige der Skalierungsentfernung $r_{scl}$ in der Weise angeglichen wird, daß die Azimut-Modulation nicht mehr von der Entfernung $r_0$ abhängig ist, wobei
-  eine quadratische Phasenmodulation anstelle einer hyperbolischen Phasenmodulation im Azimut durchgeführt wird, so daß, um eine Azimut-Prozessierung mit sehr hoher Phasengenauigkeit zu erreichen, die Azimut-Frequenzmodulation exakt linear wird.

**2.**  Hochgenauer Prozessor zur zweidimensionalen Verarbeitung von ScanSAR-Daten unter Verwendung des Chirp-Scaling- und des SPECAN-Verfahrens sowie der Azimut-Skalierung nach Anspruch 1, bei welchem
zur Nebenzipfeldämpfung zuerst ScanSAR-Rohdaten im Zeitbereich in Azimutrichtung mit einer Gewichtungsfunktion $H_0$ multipliziert (3.2) und nach einer ersten Azimut-FFT (3.3) erhaltene Signale mit einer Chirp-Scaling-Funktion

$$H_1(f_a, t_e; r_0) = \exp\left[-j\pi k_{eff}(f_a; r_{fref})a(f_a)\left(t_e - t_{e,ref}(f_a)\right)^2\right]$$

multipliziert (3.5) werden;
nach einer Entfernungs-FFT (3.6) in dem zweidimensionalen Frequenzbereich erhaltene Signale durch Multiplizieren (3.8) mit einer Phasenfunktion

$$H_2(f_a, f_e; r_{ref}) = \exp\left[\frac{-j\pi f_e^2}{k_{eff}(f_a; r_{ref})(1 + a(f_a))}\right]\exp\left[\frac{j4\pi}{c_0}r_{ref}\, a(f_a)f_e\right]$$

eine Entfernungskompression sowie eine Korrektur der Zielentfernungsänderung unterzogen werden;
nach einer Entfernungs-IFFT (3.9) die Signale mit einer Phasenkorrekturfunktion

$$H_3(f_a; r_0) = \exp\left[j\pi k_{eff}(f_a; r_{ref})(1 + a(f_a))a(f_a)\left(\frac{2}{c_0}(r_0 - r_{ref})\right)^2\right]$$

multipliziert (3.11) und
anschließend mit einer dem Kehrwert eines ermittelten Antennendiagramms entsprechenden Gewichtungsfunktion $H_4(f_a)$ multipliziert (3.13) werden;
durch Multiplizieren (3.15) der Signale mit einer Phasenfunktion

$$H_5(f_a;r_o) = \exp\left[\frac{j4\pi r_o}{\lambda}\left(\sqrt{1 - \frac{f_a^2\lambda^2}{4V_gV_s}} - 1\right)\right]\exp\left[\frac{j\pi}{k_{scl}}f_a^2\right]$$

$$k_{scl} = \frac{2V_gV_s}{\lambda r_{scl}}$$

eine Azimut-Scalierung durchgeführt wird;

die nach Rücktransformation in den Zeitbereich durch eine Azimut-IFFT (3.16) erhaltenen Daten mit einer Derampingfunktion

$$H_6(t_a) = \exp\left[j\pi k_{scl} t_a^2\right]$$

multipliziert werden und schließlich auf die nach einer weiteren Azimut-FFT (3.19) erhaltenen Signale eine Phasenfunktion

$$H_7(f_a) = \exp\left[j2\pi f_a \frac{T'}{2}\right]$$

multipliziert wird,

wobei mit $f_a$ die Azimutfrequenz, mit $t_e$ die Zeit in Entfernungsrichtung, mit $r_o$ die Entfernung zu einem Zeitpunkt, mit $k_{eff}$ die von der Azimutfrequenz und der Referenzentfernung abhängige Modulationsrate, mit $r_{ref}$ die Referenzentfernung, mit $a(f_a)$ der lineare Skalierungsfaktor, mit $f_e$ die Entfernungsfrequenz, mit $c_o$ die Lichtgeschwindigkeit, mit $\lambda$ die Wellenlänge, mit $V_g$ die Geschwindigkeit am Boden, mit $V_s$ die Geschwindigkeit des Trägers, mit $k_{scl}$ die Skalierungs-Dopplerrate, mit $r_{scl}$ die Skalierungs-Entfernung, mit $t_a$ die Zeit in Azimutrichtung und mit T' die Gesamtlänge des Azimutsignals im Zeitbereich bezeichnet sind.

## Claims

1. Method for azimuth scaling of SAR raw data without interpolation, whereby

 - the raw SAR data in azimuth are multiplied with a corresponding phase function

$$H_5(f_a;r_o) = \exp\left[\frac{j4\pi r_o}{\lambda}\left(\sqrt{1 - \frac{f_a^2\lambda^2}{4V_gV_s}} - 1\right)\right]\exp\left[\frac{j\pi}{k_{scl}}f_a^2\right]$$

$$k_{scl} = \frac{2V_gV_s}{\lambda r_{scl}}$$

where $f_a$ is the azimuth frequency, $r_o$ is the range to a target point, M is the wavelength, $V_g$ is the ground velocity, $V_s$ is the velocity of the vehicle, $k_{scl}$ is the scaling Doppler rate, and $r_{scl}$ is the scaling range, whereby the scaling range $r_{scl}$ should be within the range dimension of an image;

 - an azimuth modulation of the SAR data is adapted so that of the scaling range $r_{scl}$ with the phase function $H_5$

$(f_a, r_0)$, in a manner so that the azimuth modulation is no longer dependent on the range $r_0$, whereby

- a quadratic phase modulation is performed instead of a hyperbolic phase modulation in the azimuth, so that the azimuth frequency modulation becomes exactly linear, to achieve an azimuth processing with a very high phase accuracy.

2. Highly accurate processor for two-dimensional processing of ScanSAR data with the chirp scaling method and the SPECAN method, and the azimuth scaling according to claim 1, in which
for sidelobe suppression, raw ScanSAR raw data are first multiplied in the time-domain in the azimuth direction with a weighting function $H_0$ (3.2), and the signals obtained after a first azimuth FFT (3.3) are multiplied with a chirp scaling function $H_1$ (3.5)

$$H_1(f_a, t_e; r_0) = \exp\left[-j\pi k_{eff}(f_a; r_{fref})a(f_a^-)(t_e - t_{e,ref}(f_a))^2\right]$$

the signals obtained in the two-dimensional frequency-domain after a range FFT (3.6) are subjected to a range compression and correction of the target range variation through multiplication (3.8) with a phase function

$$H_2(f_a, f_e; r_{ref}) = \exp\left[\frac{-j\pi f_e^2}{k_{eff}(f_a; r_{ref})(1 + a(f_a))}\right]\exp\left[\frac{j4\pi}{c_0} r_{ref} a(f_a) f_e\right]$$

the signals obtained after a range IFFT (3.9) are multiplied with a phase correction function (3.11)

$$H_3(f_a; r_0) = \exp\left[j\pi k_{eff}(f_a; r_{ref})(1 + a(f_a))a(f_a)\left(\frac{2}{c_0}(r_0 - r_{ref})\right)^2\right]$$

and subsequently multiplied (3.13) with a weighting function $H_4(f_a)$ that corresponds to the reciprocal value of a determined antenna diagram;
an azimuth scaling is performed through multiplication (3.15) of the signals with a phase function

$$H_5(f_a; r_0) = \exp\left[\frac{j4\pi r_0}{\lambda}\left(\sqrt{1 - \frac{f_a^2 \lambda^2}{4 V_g V_s}} - 1\right)\right]\exp\left[\frac{j\pi}{k_{scl}} f_a^2\right]$$

$$k_{scl} = \frac{2 V_g V_s}{\lambda r_{scl}}$$

the data obtained after transformation back to the time-domain with an azimuth IFFT (3.16) are multiplied with a deramping function

$$H_6(t_a) = \exp\left[j\pi k_{scl} t_a^2\right]$$

and, in a last step, a phase function is multiplied onto the signals obtained after another azimuth FFT (3.19),

$$H_7(f_a) = \exp\left[j2\pi f_a \frac{T'}{2}\right]$$

where $f_a$ is the azimuth frequency, $t_e$ is the time in range direction, $r_o$ is the range to a point in time, $k_{eff}$ is the modulation rate depending on the azimuth frequency and the reference range $r_{ref}$, $a(f_a)$ is the linear scaling factor, $f_e$ is the range frequency, $c_o$ is the speed of light, $\lambda$ is the wavelength, $V_g$ is the ground velocity, $V_s$ is the velocity of the vehicle, $k_{scl}$ is the scaling Doppler rate, $r_{scl}$ is the scaling range, $t_a$ is the time in azimuth direction, and T' is the total duration of the azimuth signal in the time-domain.

**Revendications**

1. Procédé de mise à l'échelle de l'azimut de données SAR sans interpolation, dans lequel ;
   les données brutes SAR sont multipliées par une fonction de phase correspondante :

$$H_5(f_a;r_0) = \exp\left[\frac{j4\pi r_0}{\lambda}\left(\sqrt{1 - \frac{f_a^2\lambda^2}{4V_gV_s}} - 1\right)\right]\exp\left[\frac{j\pi}{k_{scl}}f_a^2\right]$$

$$k_{scl} = \frac{2V_gV_s}{\lambda r_{scl}}$$

$f_a$ désignant la fréquence azimutale, $r_0$ la distance jusqu'à un point cible, $\lambda$ la longueur d'onde, $V_g$ la vitesse au sol, $V_s$ la vitesse du porteur, $k_{scl}$ l'effet Doppler de mise à l'échelle et $r_{scl}$ la distance de mise à l'échelle, la distance de mise à l'échelle $r_{scl}$ devant se situer à l'intérieur d'une plage de distance d'une image, et

   - une modulation azimutale pour les données SAR étant ajustée par la fonction de phase $H_5(f_a, r_o)$ avec celle de la distance de mise à l'échelle $r_{scl}$ de telle sorte que la modulation azimutale ne dépend plus de la distance $r_o$,
   - une modulation de phase quadratique à la place d'une modulation de phase hyperbolique étant pratiquée en azimut, de sorte que pour obtenir un traitement azimutal de très haute précision de phase, la modulation de fréquence azimutale est parfaitement linéaire.

2. Processeur haute précision pour le traitement bi-dimensionnel de donnée ScanSAR en utilisant le procédé Chirp-Scaling et des SPECAN ainsi que la mise à l'échelle de l'azimut selon la revendication 1, dans lequel
   pour l'atténuation du lobe secondaire, on multiplie d'abord les données brutes ScanSAR dans le domaine temps dans la direction azimutale par une fonction de pondération $H_o$ (3.2) et les signaux reçus après un premier FFT azimutal (3.3) sont multipliés par une fonction Chirp-Scaling (3.5)

$$H_1(f_a,t_e;r_0) = \exp\left[-j\pi k_{eff}(f_a;r_{ref})a(f_a)\left(t_e - t_{e,ref}(f_a)\right)^2\right]$$

les signaux reçus après FFT de distance (3.6) dans la zone de fréquence bi-dimensionnelle sont soumis par multiplication (3.8) avec une fonction de phase

$$H_2(f_a, f_e; r_{ref}) = \exp\left[\frac{-j\pi f_e^2}{k_{eff}(f_a; r_{ref})(1 + a(f_a))}\right] \exp\left[\frac{j4\pi}{c_o} r_{ref}\, a(f_a) f_e\right]$$

à une compression de distance et à une correction de la modification de distance de cible ;

après un IFFT de distance (3.9) les signaux sont multipliés par une fonction de correction de phase (3.11)

$$H_3(f_a; r_0) = \exp\left[j\pi k_{eff}(f_a; r_{ref})(1 + a(f_a))a(f_a)\left(\frac{2}{c_o}(r_0 - r_{ref})\right)^2\right]$$

et sont consécutivement multipliés par une fonction de pondération $H_4(f_a)$ correspondant à la valeur de retour d'un schéma d'antenne déterminé (3.13) ;

par multiplication (3.15) des signaux ou avec une fonction de phase

$$H_5(f_a; r_0) = \exp\left[\frac{j4\pi r_0}{\lambda}\left(\sqrt{1 - \frac{f_a^2 \lambda^2}{4 V_g V_s}} - 1\right)\right]\exp\left[\frac{j\pi}{k_{scl}} f_a^2\right]$$

$$k_{scl} = \frac{2 V_g V_s}{\lambda r_{scl}}$$

on effectue une mise à l'échelle azimutale ;

les données obtenues après retransformation dans la zone temps par IFFT azimutal (3.16) sont multipliées par une fonction Deramping

$$H_6(t_a) = \exp\left[j\pi k_{scl} t_a^2\right]$$

et enfin les signaux obtenus après un autre FFT azimutal (3.19) sont multipliés à une fonction de phase

$$H_7(f_a) = \exp\left[j2\pi f_a \frac{T'}{2}\right]$$

$f_a$ désignant la fréquence azimutale, $t_e$ le temps de la direction de distance, $r_0$ la distance jusqu'à un point cible, $k_{eff}$ le taux de modulation dépendant de la fréquence azimutale et de la distance de référence, et $r_{ref}$ la distance de référence, $a(f_a)$ le facteur de mise à l'échelle linéaire, $f_e$ la fréquence de distance, $c_o$ la vitesse de la lumière, $\lambda$ la longueur d'onde, $V_g$ la vitesse au sol, $V_s$ la vitesse du porteur, $k_{scl}$ l'effet Doppler de mise à l'échelle, $r_{scl}$ la distance de mise à l'échelle, $t_a$ le temps dans la direction azimutale et $T'$ la longueur totale du signal azimutal dans la zone temps.

# Fig.1

Fig.2

# Fig.3

Rohdaten

3.1 — Azimutgewichtung — H0 → ⊗ 3.2

3.3 — Azimut FFT

3.4 — Chirp Scaling — H1 → ⊗ 3.5

3.6 — Entfernungs FFT

3.7 —
| Korrektur der Ziel-entfernungsänderung |
| Entfernungs-kompression |
| Zweite Entfernungs-kompression |
H2 → ⊗ 3.8

3.9 — Entfernungs IFFT

3.10 — Phasenkorrektur aufgrund des Chirp Scaling — H3 → ⊗ 3.11

3.12 — Ausgleich des Antennendiagramms — H4 → ⊗ 3.13

3.14 — Entfernung der hyperbolischen Azimutphase und Einfügen der linearen Frequenzmodulation — H5 → ⊗ 3.15

3.16 — Azimut IFFT

3.17 — Deramping — H6 → ⊗ 3.18

3.19 — Azimut FFT

3.20 — Phasenkorrektur aufgrund der Zeitverschiebung — H7 → ⊗ 3.21

Bilddaten

# Fig.4

Rohdatenblock

4.1

4.2

**Azimut FFT**

4.3

4.4

**Korrektur der Zielentfernungsänderung**
**Entfernungskompression**

4.5

Amplitude

4.6

4.7

**Ausgleich des Antennendiagramms**

Amplitude

4.8

4.9

**Entfernen der hyperbolischen Azimutphase und Einfügen der linearen Frequenzmodulation**
**Azimut IFFT**

4.10

Amplitude

4.11

4.12

**Deramping**
**Azimut FFT**

4.13

Amplitude

4.14

Fig.5

Fig.6

Fig.7